# EUROPÄISCHE PATENTSCHRIFT

(11) **EP 2 366 461 B1**
(45) Veröffentlichungstag und Bekanntmachung des Hinweises auf die Patenterteilung: **22.05.2013**
(21) Anmeldenummer: 11156255.9
(22) Anmeldetag: 28.02.2011
(51) Int. Cl.: B07B 4/02, B07B 4/06, B07B 11/06, B07B 15/00, B65G 47/72, B65G 47/80

(54) **Windsichter mit Verteilertellern**
Air classifier with distribution plates
Séparateur pneumatique doté de plateaux de distribution

(30) Priorität: 19.03.2010 DE 102010012200; 30.04.2010 DE 102010016735
(43) Veröffentlichungstag der Anmeldung: 21.09.2011
(60) Teilanmeldung: 12166716.6
(73) Patentinhaber: WESTERIA Fördertechnik GmbH, 48346 Ostbevern (DE)
(72) Erfinder: Westbrock, Bernhard, 48291, Telgte (DE)
(74) Vertreter: Habbel, Ludwig

(56) Entgegenhaltungen:
- WO-A1-2007/119254
- DE-A1- 3 223 764
- DE-A1- 4 125 236
- DE-A1- 19 501 263
- DE-A1-102007 013 185
- DE-U1- 8 606 061
- FR-A- 978 008
- GB-A- 1 049 352
- JP-A- 9 276 802
- JP-A- 11 244 787
- JP-A- 2002 192 078
- US-A- 3 910 775

## Beschreibung

Die Erfindung betrifft einen Windsichter.

Ein gattungsgemäßer Windsichter ist aus der EP 0 546 442 B1 bekannt. Als Förderorgan wird ein Förderband verwendet, über welches die Abfallmischung zur Sichttrommel geführt wird. Die Leistungsfähigkeit des gesamten Windsichters ist unmittelbar abhängig von der Zuführbreite der Bandanlage, also davon, über eine wie große Breite verteilt die Abfallmischung auf die Sichttrommel aufgegeben werden kann. Die Verteilung des Abfalls auf eine größere Breite ermöglicht eine geringere Schichtdicke des transportierten Abfalls und erleichtert somit die Sichtung des Abfalls.

Aus der JP 9 276 802 A ist ein Windsichter bekannt, bei dem statt einer Sichttrommel zwei rotierende Walzen vorgesehen sind, gegen die leichtgewichtige Schaumstoffe geblasen werden, so dass sie zwischen den Walzen zerkleinert werden. Eine Sichttrommel ist nicht vorgesehen.

Aus der JP 2002 192 078 A ist ein Windsichter bekannt, bei dem das von einem Förderband herangeführte Gut auf einen Drehteller fällt , bevor es von einem Gebläse erfasst und unterschiedlich weit durch die Luft transportiert wird. Ein mechanisches Bauteil wie eine Sichttrommel ist nicht vorgesehen, denn ausdrücklich sollen weniger mechanische Komponenten als im bekannten Stand der Technik verwendet werden und ein geringerer Verbrauch an elektrischer Energie erzielt werden.

Aus der JP 11 244 787 A ist ein Windsichter bekannt, bei dem Abstreifelemente dazu dienen, leichtgewichtiges Material von einem Schirm zu entfernen. Der Schirm weist Öffnungen auf. Während schweres Material von einer Zuführeinheit herabfällt, wird das leichtgewichtige Material von unten gegen den Schirm geblasen. Ein Anteil des leichtgewichtigen Materials bleibt aufgrund der Luftströmung an der Unterseite des Schirms hängen. Um den Schirm nicht allmählich zu verstopfen, sind die Öffnungen des Schirms als längliche Schlitze ausgestaltet. Ein Abstreiferband ist oberhalb des Schirms angeordnet. Es weist Mitnehmerstifte auf und ist so angeordnet, dass sich beim Umlauf des Abstreiferbandes die Mitnehmerstifte nach unten durch die Schlitze des Schirms bewegen und das dort vom Luftstrom angepresste leichtgewichtige Material mitnehmen bis zu einer Abstreifzone. In der Abstreifzone ist die Luftströmung schwächer. Die Mitnehmerstifte werden in der Abstreifzone aus den Schlitzen des Schirms herausgeführt, so dass sie das leichtgewichtige Material nicht mehr erfassen. Aufgrund der schwachen Luftströmung fallen diese Materialanteile nach unten, wo sie von anderen Anteilen der ursprünglichen Materialmischung getrennt sind. Eine Sichttrommel ist nicht vorgesehen.

Aus der DE 195 01 263 A1 ist eine Vorrichtung zur Sichtung eines Materialien-Gemisches bekannt, bei der das von einem Förderband herangeführte Gut auf eine Rüttelplatte fällt , bevor es von einem Gebläse erfasst und unterschiedlich weit durch die Luft transportiert wird, über ein zweites Förderband hinweg. Schwere Bestandteile des Gutes bleiben auf dem zweiten Förderband liegen, während die leichten Bestandteile über das zweite Förderband hinweg geblasen werden. Oberhalb des Förderbandes kann ein Sauggebläse vorgesehen sein, welches die leichten Bestandteile anhebt und abführt. Eine Sichttrommel ist nicht vorgesehen.

Aus der DE 10 2007 013 185 A1 ist eine Streuanordnung an einem Fahrzeug bekannt, wie sie zum Ausbringen von Streugut vorgesehen ist, wobei das Streugut mittels einer Streuscheibe großflächig verteilt wird. Das zugeführte Material ist üblicherweise homogen, wie dies aus der Praxis beispielsweise beispielsweise von Streusalz, Düngemittel oder dergleichen bekannt ist. Eine Verstellung des Streutellers ermöglicht eine Anpassung des erzielbaren Streubildes an das jeweils verwendete und zu verstreuende Material. Diese Druckschrift betrifft weder eine Sichtvorrichtung, die zum Trennen einer inhomogenen Materialmischung geeignet wäre, noch weist sie eine Sichttrommel auf.

Aus der DE 32 23 764 A1 ist eine Vorrichtung zum Ausstreuen von körnigem und / oder pulverigem Gut, insbesondere Kunstdünger oder Saatgut, bekannt. Auch hier lassen sich die verwendeten Schleuderscheiben, die das Material großflächig verteilen, in Anpassung an das jeweils verwendete Material in ihrer Neigung einstellen. Streifenförmige Leitflächen sind auf der mit dem Material in Kontakt kommenden Oberfläche der Schleuderscheiben vorgesehen. Auch diese Druckschrift betrifft keine Sichtvorrichtung, die zum Trennen einer inhomogenen Materialmischung geeignet wäre, und weist auch keine Sichttrommel auf.

In der Abfallwirtschaft besteht daher das Problem, Abfall von einem ersten Förderorgan, beispielsweise einem Transportband vorgegebener Breite, auf eine größere Breite zu verteilen. Dabei kann es sich um eine Abfallmischung aus Komponenten unterschiedlichen Materials und ggf. unterschiedlichen spezifischen Gewichts handeln, oder um eine demgegenüber homogenere Abfallmenge.

Aus der Praxis ist es beispielsweise bekannt, die Verteilung mit Hilfe von Verteilschurren oder mit Hilfe von Förderrinnen durch-zuführen. Die Verteilschurren werden dabei mit Kaskaden bestückt, um eine Verteilung zu erwirken. Die Kaskaden können jedoch nur bei bestimmten Materialien eingesetzt werden, wenn beispielsweise folienartige Produkte aufgegeben werden, so bleiben diese häufig an den Kaskaden hängen. Zudem ist für die Anordnung derartiger Kaskaden eine sehr große Übergabehöhe erforderlich, die in vielen praxisüblichen Abfallsortieranlagen nicht gegeben ist. Wenn jedoch der für die entsprechenden Kaskaden erforderliche Bauraum nicht verfügbar ist, so können die Kaskaden nur mit eingeschränkter Funktionalität verwirklicht werden und dementsprechend das Material der Abfallmischung nicht auf die gewünschte, möglichst große Breite verteilen.

Die alternativ eingesetzten Förderrinnen sind schräg angeschnitten, um eine Verteilung auf eine größere Breite zu ermöglichen. Nachteilig ist dabei der große Platzbedarf, da sich der Schrägschnitt der Förderrinnen über eine große Länge erstreckt. Zudem neigen derartig schräg angeschnittene Förderrinnen zu Anbackungen. Eine rechtwinklige Übergabe von einem ersten auf ein zweites Förderorgan ist zudem schwierig. Wenn das Abfallmaterial auf eine Nutzbreite von beispielsweise 3.000 mm verteilt werden soll, so ist bei der Verwendung von Förderrinnen eine Rinnenlänge von etwa 6.000 mm erforderlich, was die Aufstellung einer entsprechenden Windsichter-Anlage entweder erschwert oder angesichts vorgegebener Platzverhältnisse unmöglich macht, jedenfalls mit einer dementsprechend großen Breite des Abfallmaterials. Die Leistungsfähigkeit der Windsichter hängt jedoch von der Breitenverteilung des Abfallmaterials ab, so dass die unter vorgegebenen Bedingungen realisierbaren Windsichter-Anlagen in ihrer Leistungsfähigkeit eingeschränkt und dementsprechend vergleichsweise unwirtschaftlich ausgeführt werden können.

Der Erfindung liegt die Aufgabe zugrunde, einen Windsichter anzugeben, welcher eine hohe Durchsatzleistung bei kompakten bauliche Abmessungen ermöglicht.

Diese Aufgabe wird durch einen Windsichter nach Anspruch 1 gelöst.

Die Erfindung schlägt mit anderen Worten die Verwendung einer Verteilervorrichtung vor, bei der die Verteilung des Abfalls mittels wenigstens eines, vorteilhaft mittels zweier Drehteller erfolgt. Der bzw. die Drehteller sind jeweils drehangetrieben und schleudern somit den Abfall, der auf sie auftrifft, teilweise nach vorne, teilweise aber auch seitlich nach außen, so dass der Abfall mittels dieser Drehteller auf eine größere Breite verteilt wird.

Bei der Verwendung zweier Drehteller sind diese vorteilhaft gegenläufig angetrieben, so dass eine Verteilung nach beiden Seiten auswärts erreicht wird und somit die Verteilung des Abfalls von einer ersten auf eine viel größere zweite Breite ermöglicht wird.

Ein Drehteller ist vorteilhaft muldenförmig konkav geformt zur Erzielung optimaler Verteilergebnisse.

Zwei Drehteller sind vorteilhaft in unterschiedlicher Höhe angeordnet, so dass sie sich teilweise überlappen können. Durch diese Überlappung wird sichergestellt, dass sämtlicher Abfall vom ersten Förderorgan auf die Verteilervorrichtung fällt, also auf die beiden Drehteller, so dass eine zuverlässige Aufnahme des vom ersten Förderorgan herab fallenden Materialstroms sichergestellt wird. Diese Anordnung ist vorteilhaft gegenüber einer beispielsweise sich nur punktuell berührenden Anordnung der beiden Drehteller, welche dann vergleichsweise große Zwickel frei ließe, so dass nicht auszuschließen wäre, dass in diese Zwickel Abfall fallen könnte, ohne von den Drehtellern erfasst zu werden.

Vorteilhaft kann an das erste Förderorgan eine Schütte anschließen, welche den Abfall auf die Drehteller übergibt. Wenn das erste Förderorgan beispielsweise als Förderband ausgestaltet ist, welches an seinem Ende um eine Umlenkrolle umgelenkt ist, so würde sich vom Obertrum des Förderbandes eine Fallhöhe des Abfalls auf die Drehteller ergeben, die durch den Durchmesser der Umlenkrolle beeinflusst ist. Im Vergleich dazu kann durch die an das erste Förderorgan anschließende Schütte eine Führung des Abfalls bewirkt werden, die bis knapp über die Drehteller reicht, so dass die Fallhöher verringert und eine möglichst präzise Übergabe des Abfallstroms auf die Verteilvorrichtung bewirkt wird, da mit Hilfe der Schütte der freie Flug des Abfalls vom Förderband auf die Verteilvorrichtung deutlich reduziert werden kann.

Zudem kann vorteilhaft vorgesehen sein, dass eine derartige Schütte nicht nur die Wegstrecke zwischen dem Abgabeende des Förderbandes und den Drehtellern überbrückt, sondern überraschend auch hinsichtlich der Breite des Abfallstroms eine Bündelung des Abfalls bewirkt, so dass der Abfall ggf. mit einer noch geringeren Breite auf die Verteilvorrichtung übergeben wird als es der Breite des Abfallstroms auf dem ersten Förderorgan entspricht. Dies ist insofern überraschend, als die Abfallmischung ja auf eine größere Breite verteilt werden soll. Durch die erwähnte Bündelung kann jedoch mit Hilfe der Schütte sehr präzise eingestellt werden, auf welche Oberflächenbereiche der Drehteller der Abfallstrom gelenkt wird, so dass hierdurch die Verteileigenschaften der Verteilvorrichtung und dementsprechend die Verteilung der Abfallmischung sehr präzise beeinflusst werden kann.

Vorteilhaft kann die Neigung der Drehteller einstellbar sein, also die Ausrichtung ihrer Drehachsen im Verhältnis zur Vertikalen, so dass die Drehteller wahlweise um eine vertikale Drehachse drehend ausgerichtet sein können oder bewusst eine von der vertikalen abweichende Neigung der Drehteller eingestellt werden kann. Durch diese Einstellbarkeit kann ebenfalls die Verteilung der Abfallmischung beeinflusst werden.

Vorteilhaft kann die mit Hilfe der Verteileinrichtung auf eine deutlich größere Breite verteilte Abfallmischung auf die obere und die dem ersten Förderorgan zugewandte Seite der Sichttrommel auftreffen. Durch die Blaseinrichtung unterstützt werden die leichteren Bestandteile der Abfallmischung oben gehalten, so dass sie mit der Sichttrommel transportiert werden, während demgegenüber schwerere Anteile der Abfallmischung entgegen der Drehrichtung der Sichttrommel nach unten fallen.

Vorteilhaft kann der Oberfläche der Sichttrommel ein Band anliegen. Dies kann erstens einen Verschleißschutz für die Sichttrommel selbst bilden, zweitens kann vorteilhaft eine schalldämmende Wirkung erzielt werden, wenn beispielsweise harte Materialien auf eine ansonsten ungedämpfte metallische Sichttrommel auftreffen würden. Dabei kann das Band der Sichttrommel eng anliegen. Es kann jedoch alternativ auch vorzugsweise vorgesehen sein, dass dieses Band als Förderband ausgestaltet ist, so dass die Sichttrommel quasi eine Umlenktrommel dieses Förderbandes bildet. Auf diese Weise kann auch bei vergleichsweise kleinem Trommeldurchmesser ein Abtransport der über den Zenit der Sichttrommel gelangten leichteren Bestandteile der Abfallmischung zu einer Stelle erfolgen, die vergleichsweise weit von der Sichttrommel entfernt ist, so dass auf diese Weise Gelegenheit besteht, der eigentlichen Sichttrommel nachgeschaltet beispielsweise eine weitere Sortierstufe für die Abfallsortierung unterzubringen.

Der Windsichter kann sozusagen in Reihe angeordnet sein, so dass beispielsweise in an sich bekannter Weise die Drehachse der Sichttrommel quer zur Förderrichtung des ersten Förderorgans ausgerichtet ist. Der Materialstrom hingegen verläuft gleichmäßig in einer Richtung, nämlich zunächst in Förderrichtung des ersten Förderorgans, beispielsweise eines Förderbandes, und anschließend über die Sichttrommel hinweg weiter in der ursprünglichen Richtung, wobei lediglich die schwereren Materialanteile an der Sichttrommel nach unten fallen.

Gegenüber dieser Reihenanordnung kann eine wesentlich kompaktere Ausgestaltung des Windsichters mit einer geringeren Baulänge verwirklicht werden, wenn die Drehachse der Sichttrommel längs zur Förderrichtung des ersten Förderorgans ausgerichtet ist, beispielsweise parallel zu einem ersten Zuförderband ausgerichtet ist. Die Materialverteilung mit Hilfe des oder der Drehteller ermöglicht problemlos auch bei einer derartigen Konfiguration die Verteilung der Abfallmischung auf eine gewünschte große Breite der Sichttrommel.

So kann vorteilhaft eine Verbreiterung der Abfallmischung auf die vier- bis sechsfache Breite gegenüber dem ersten Förderorgan erfolgen.

Vorteilhaft kann in an sich bekannter Ausgestaltung des Windsichters vorgesehen sein, dass die Abfallmischung von einem Band als Förderorgan auf die Sichttrommel aufgegeben werden kann. Dieses Band wird vorschlagsgemäß als Breitband bezeichnet, denn es stellt ein zweites Förderorgan dar, auf welches die Verteilvorrichtung die von dem ersten Förderorgan zugeförderten Anteile zu einer größeren Breite verteilt hat. Bei einer zylindrischen Ausgestaltung der Sichttrommel ist durch ein Förderband als zweites Förderorgan sichergestellt, dass sämtliche Materialanteile im selben Umfangsbereich auf die Sichttrommel auftreffen, beispielsweise auf den bevorzugten Umfangsquadranten, der zwischen dem Zenit und dem dem Zuförderorgan zugewandten Äquator der Sichttrommel liegt.

Alternativ zu der Verwendung des vorbeschriebenen Breitbandes kann zu Gunsten besonders kompakter baulicher Abmessungen des Windsichters vorgesehen sein, dass die Abfallmischung, die vom ersten Förderorgan auf die Verteilvorrichtung trifft, ohne Zwischenschaltung eines zweiten Förderorgans auf die Sichttrommel verteilt wird. Der dabei realisierbare Raumgewinn ist unmittelbar ersichtlich. Problematisch kann sein, dass die unterschiedlich langen Flugbahnen, welche die einzelnen Anteile der Materialmischung von der Verteilvorrichtung bis zur Oberfläche der Sichttrommel zurücklegen dazu führen können, dass sich die Materialmischung über einen unerwünscht großen Umfangsbereich der Sichttrommel verteilt. Daher kann vorteilhaft vorgesehen sein, dass die Verteilvorrichtung die Abfallmischung höher als ursprünglich beabsichtigt verteilt, so dass auf diese Weise sichergestellt ist, dass auch die Anteile der Abfallmischung mit der längsten Flugbahn, die also den niedrigsten Auftreffpunkt auf der Sichttrommel haben werden, in dem gewünschten Umfangsbereich auf die Sichttrommel auftreffen. Für die anderen, demgegenüber zu hoch verteilten Anteile der Abfallmischung ist in diesem Fall vorteilhaft oberhalb der Sichttrommel ein Prallelement angeordnet, welches dort auftreffende Anteile der Abfallmischung nach unten und gegen die Sichttrommel lenkt. Das Prallelement kann als aufrecht ausgerichtetes Prallblech bzw. aus Ketten o. dgl. bestehender Prallvorhang ausgestaltet sein, der durch seine Nachgiebigkeit ein unerwünschtes Zurückschleudern der auftreffenden Abfallanteile verhindert. Alternativ kann das Prallelement als liegend ausgerichtete und ggf. drehangetriebene Prallwalze ausgestaltet sein, die den auftreffenden Anteilen der Abfallmischung die gewünschte Richtungsumkehr vermittelt. Schließlich kann das Prallelement vorteilhaft als gewogenes Führungsblech ausgestaltet sein, so dass keine Reflektionen oder Rückpraller der gegen das Prallelement auftreffenden Anteile der Abfallmischung zu befürchten sind, sondern die Anteile der Materialmischung gegen das Führungsblech verteilt und dann von diesem umgelenkt werden und auf den gewünschten Trommelumfang der Sichttrommel gelenkt werden.

Ausführungsbeispiele eines vorschlagsgemäßen Windsichters werden anhand der rein schematischen Darstellungen nachfolgend näher erläutert. Dabei zeigt
- Fig. 1: eine Seitenansicht auf einen Windsichter,
- Fig. 2: eine Draufsicht auf den Windsichter von Fig. 1,
- Fig. 3: eine schematische Seitenansicht auf ein zweites Ausführungsbeispiel mit einem Prallelement,
- Fig. 4 u. 5: zwei weitere Ausführungsbeispiele in Seitenansicht,
- Fig. 6: eine Draufsicht auf das Ausführungsbeispiel von Fig. 3, und
- Fig. 7: in einer Prinzipdarstellung Flugbahnen von Anteilen der Abfallmischung beim Ausführungsbeispiel der Fig. 6.

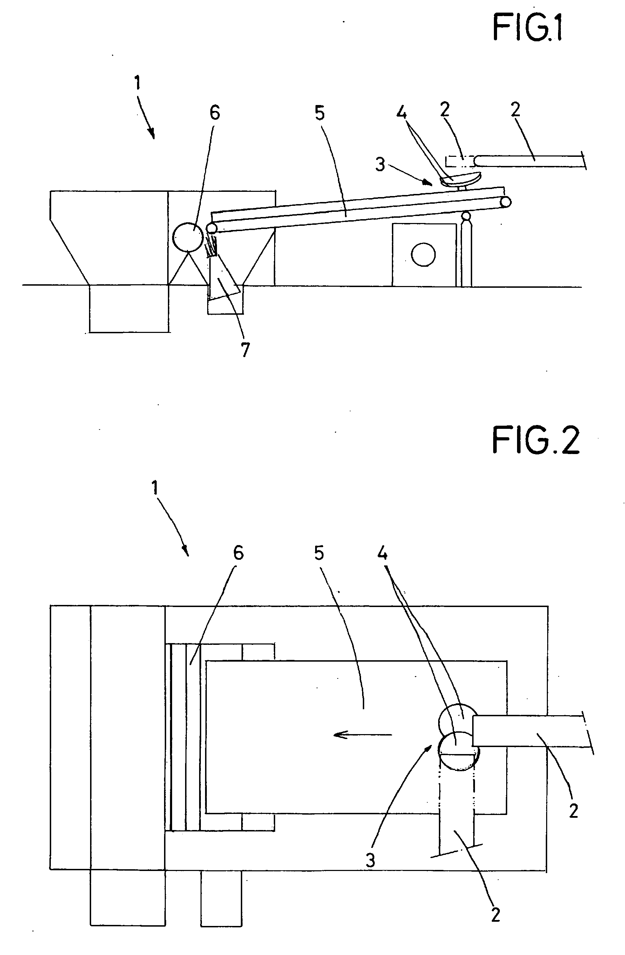

In Fig. 1 ist die prinzipielle Anordnung eines Windsichters 1 dargestellt: Ein erstes Zuführorgan 2 ist als Förderband ausgestaltet, wobei in Fig. 1 alternativ zwei Ausrichtungen des Förderbandes angedeutet sind, so dass aus diesem Grund zweimal das erste Förderorgan 2 in der Zeichnung vorgesehen ist, wobei auf die beiden unterschiedlichen Alternativen später näher eingegangen werden wird.

Vom ersten Förderorgan 2 mit einer vergleichsweise schmalen Bandbreite von beispielsweise 500 mm gelangt die Abfallmischung auf eine Verteilvorrichtung 3, die, wie insbesondere aus Fig. 2 ersichtlich ist, zwei Drehteller 4 umfasst. Von der Verteilvorrichtung 3 wird die Abfallmischung auf ein zweites Förderorgan, welches als Breitband 5 bezeichnet ist, verteilt und von diesem Breitband 5 wird die nun breit verteilte Abfallmischung auf eine Sichttrommel 6 übergeben. Der Abstand zwischen dem Breitband 5 und der Sichttrommel 6 sowie die Laufgeschwindigkeit des Breitbandes 5 sind in Anpassung an das Abfallmaterial derart eingestellt, dass die Abfallmischung im oberen rechten Quadranten, bezogen auf die Blickrichtung in Fig. 1, auf die Sichttrommel 6 auftrifft, also auf den Trommelumfang der Sichttrommel 6, der zwischen seiner obersten Stelle, also dem Zenit, und der am weitesten nach rechts, zum Breitband 5, weisenden Stelle, also seinem dortigen Äquator, befindlich ist.

Eine schematisch angedeutete Blaseinrichtung 7 ist zwischen dem Ende des Breitbandes 5 und der Sichttrommel 6 angeordnet. Die Sichttrommel 6 dreht sich, bezogen auf die Blickrichtung von Fig. 1, gegen den Uhrzeigersinn, so dass dort, wo der Luftstrom aus der Blaseinrichtung 7 auf den Trommelumfang der Sichttrommel 6 trifft, die Bewegungsrichtung der Sichttrommel 6 und die Blasrichtung des Luftstroms etwa gleichgerichtet sind, und jedenfalls nicht gegenläufig sind.

Wie aus Fig. 2 ersichtlich ist, weist das Breitband 5 eine deutlich größere Breite auf als das erste Förderorgan 2. Zudem ist aus Fig. 2 ersichtlich, dass mit Hilfe der vorschlagsgemäß verwendeten Teilvorrichtung 3 die Zuführung des ersten Förderorgans 2 entweder in Reihe erfolgen kann, also in derselben Förderrichtung wie sie das Breitband 5 aufweist, oder quer dazu.

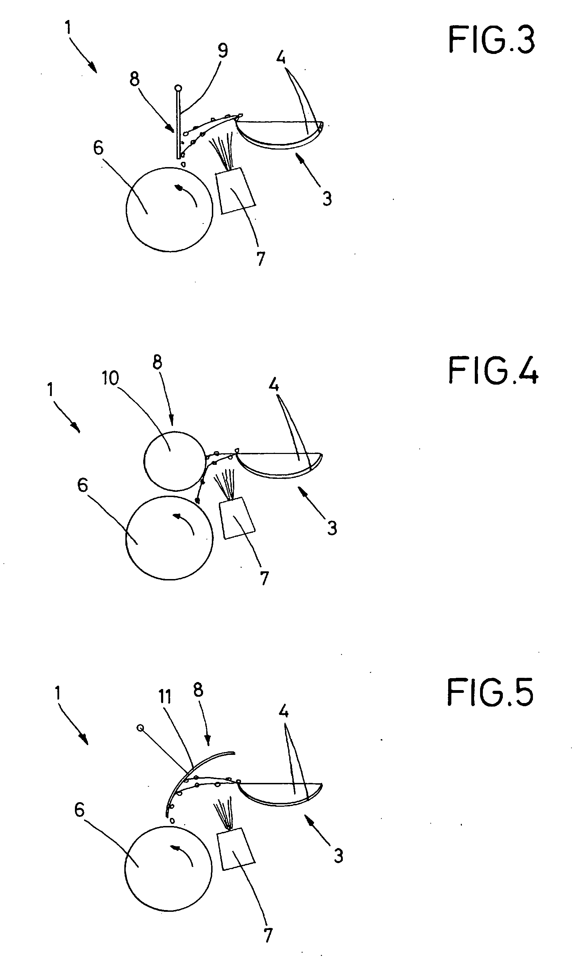

Fig. 3 zeigt ein zweites Ausführungsbeispiel eines Windsichters 1, wobei hier lediglich einige wesentliche Elemente des Windsichters 1 dargestellt sind. Es ist insbesondere ersichtlich, dass die Aufgabe der Abfallmischung von der Verteilvorrichtung 3 nicht über ein Breitband oder ein anderes nachgeschaltetes Förderorgan erfolgt, sondern dass grundsätzlich die Abfallmischung unmittelbar von der Verteilvorrichtung 3 auf die Sichttrommel 6 aufgegeben wird.

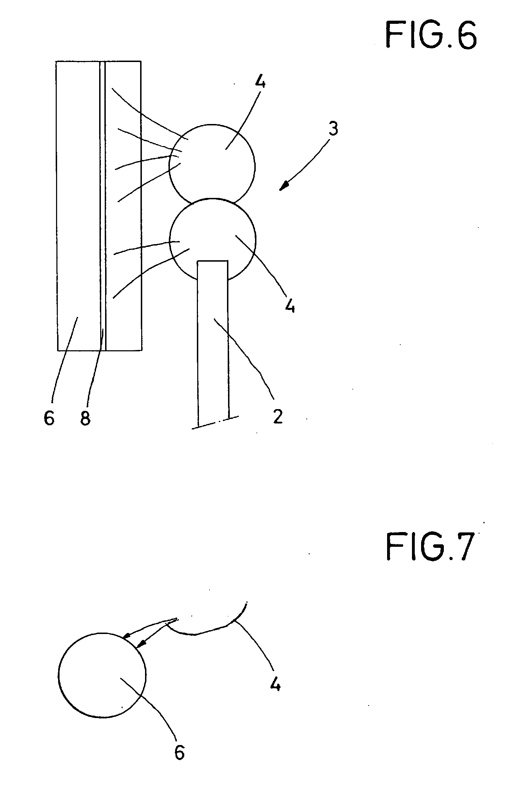

Fig. 6 verdeutlicht diese Situation: Die Verteilvorrichtung 3 mit ihren beiden Drehtellern 4 ist etwa mittig vor der Sichttrommel 6 angeordnet. Hierdurch ergeben sich allerdings, wie durch die angedeuteten gebogenen Linien verdeutlicht ist, unterschiedlich lange Flugbahnen für die einzelnen Anteile der Abfallmischung von der Verteilvorrichtung 3 auf die Sichttrommel 6. Diese unterschiedlichen Flugbahnen führen, wie Fig. 7 verdeutlicht, je nach Länge der Flugbahn zu unterschiedlichen Auftreffpunkten des Abfalls auf die Oberfläche der Sichttrommel 6. Aus diesem Grund ist in Fig. 3 die Verteilvorrichtung 3 derart ausgerichtet, dass, wie die dort angedeuteten Flugbahnen verdeutlichen, etliche oder sogar sämtliche Anteile der Abfallmischung über die Sichttrommel 6 hinweg verteilt würden. Aus diesem Grund ist in den Flugweg der Abfallmischung ein Prallelement 8 eingebracht, welches bei dem dargestellten Ausführungsbeispiel als Prallvorhang 9 ausgestaltet ist. Das Prallelement 8 könnte als starres Blech ausgestaltet sein, ein Prallvorhang 7 aus Ketten, aus einem Kunststoffbehang o. dgl., weist jedoch den Vorteil auf, kinetische Energie der auftreffenden Abfallstücke zu absorbieren, so dass diese dann regelrecht am Prallvorhang 9 herabtropfen und auf den vorteilhaft gewünschten Quadranten des Trommelumfangs der Sichttrommel 6 auftreffen.

Fig. 4 zeigt ein Ausführungsbeispiel ähnlich dem der Fig. 3, wobei das Prallelement 8 in diesem Fall als Prallwalze 10 ausgestaltet ist, die liegend ausgerichtet und etwa achsparallel zur Sichttrommel 6 oberhalb von dieser angeordnet ist.

Eine weitere Alternative zeigt Fig. 5: Dort ist das Prallelement 8 als gebogenes Führungsblech 11 ausgestaltet, welches auftreffende Abfall-Anteile umlenkt und gegen den gewünschten Umfangsabschnitt der Sichttrommel 6 führt. In dem Auftreffpunkt, wo die Abfall-Anteile auf das Führungsblech 11 auftreffen, ist das Führungsblech 11 sowohl gegenüber der Vertikalen als auch der Horizontalen schräg ausgerichtet. Alternativ zu diesem gebogenen Führungsblech 11 könnte daher ein Prallelement vorgesehen sein, welches geradlinig, jedoch entsprechend schräg ausgerichtet ist, um die Abfall-Anteile auf die Sichttrommel 6 zu lenken.

## Patentansprüche

1. Windsichter,
mit einem ersten Förderorgan (2), welches eine Abfallmischung zu einer Sichttrommel (6) führt,
wobei die Abfallmischung auf die Außenseite der Sichttrommel (6) aufgebbar ist,
und wobei zwischen dem ersten Förderorgan (2) und der Sichttrommel (6) eine Blaseinrichtung (7) angeordnet ist, deren Luftstrom von unten gegen den Bereich der Sichttrommel (6) gerichtet ist, auf den die Abfallmischung trifft,
und wobei die Drehrichtung der Sichttrommel (6) mit der Blasrichtung des Luftstroms dort übereinstimmt, wo der Luftstrom auf den Umfang der Sichttrommel (6) trifft,
**dadurch gekennzeichnet,**
**dass** zwischen dem ersten Förderorgan (2) und der Sichttrommel (6) eine Verteilvorrichtung (3) vorgesehen ist, die wenigstens einen liegend angeordneten, drehangetriebenen Drehteller (3) aufweist,
wobei die Verteilvorrichtung (3) derart ausgestaltet ist, dass sie die von dem ersten Förderorgan (2) auftreffenden Anteile der Abfallmischung über eine größere Breite verteilt als diese auf dem ersten Förderorgan (2) einnehmen.

2. Windsichter nach Anspruch 1,
**dadurch gekennzeichnet,**
**dass** die Verteilvorrichtung (3) zwei liegend angeordnete, gegenläufig drehende Drehteller (4) aufweist, welche auftreffende Anteile der Abfallmischung in Förderrichtung des ersten Förderorgans (2) nach vorn und in seitlicher Richtung nach außen verteilen.

3. Windsichter nach Anspruch 1 oder 2,
**dadurch gekennzeichnet,**
**dass** die auf die größere Breite verteilte Abfallmischung auf die obere Hälfte und die dem ersten Förderorgan (2) zugewandte Seite der Sichttrommel (6) auftreffen.

4. Windsichter nach einem der vorhergehenden Ansprüche,
**dadurch gekennzeichnet,**
**dass** der Oberfläche der Sichttrommel (6) ein Band anliegt.

5. Windsichter nach Anspruch 4,
**dadurch gekennzeichnet,**
**dass** das Band als Förderband ausgestaltet ist, wobei die Sichttrommel (6) eine Umlenkrolle des Förderbandes bildet,

6. Windsichter nach einem der vorhergehenden Ansprüche,
**dadurch gekennzeichnet,**
**dass** die Drehteller (4) jeweils muldenförmig konkav geformt sind.

7. Windsichter nach einem der vorhergehenden Ansprüche,
**dadurch gekennzeichnet,**
**dass** die Drehteller (4) in unterschiedlicher Höhe angeordnet sind,
und **dass** sich ein erster Drehteller (4) bereichsweise über einen zweiten Drehteller (4) erstreckt.

8. Windsichter nach einem der vorhergehenden Ansprüche,
**dadurch gekennzeichnet,**
**dass** eine Schütte vorgesehen ist, welche an das erste Förderorgan (2) anschließt und zwischen diesem und den Drehtellern (4) angeordnet ist.

9. Windsichter nach Anspruch 8,
**dadurch gekennzeichnet,**
**dass** die Schütte den vom ersten Förderorgan (2) kommenden Abfall am Ende der Schütte auf eine geringere Breite bündelt als die Breite, mit welcher der Abfall auf dem ersten Förderorgan (2) verteilt ist.

10. Windsichter nach einem der vorhergehenden Ansprüche,
**dadurch gekennzeichnet,**
**dass** die Ausrichtung der Drehteller (4) im Verhältnis zur Vertikalen einstellbar ist.

11. Windsichter nach einem der vorhergehenden Ansprüche,
**dadurch gekennzeichnet,**
**dass** die Drehachse der Sichttrommel (6) quer zur Förderrichtung des ersten Förderorgans (2) ausgerichtet ist.

12. Windsichter nach einem der Ansprüche 1 bis 11,
**dadurch gekennzeichnet,**
**dass** die Drehachse der Sichttrommel (6) längs zur Förderrichtung des ersten Förderorgans (2) ausgerichtet ist.

13. Windsichter nach einem der vorhergehenden Ansprüche,
**dadurch gekennzeichnet,**
**dass** die Abfallmischung auf der Sichttrommel (6) über eine Breite verteilt ist, die 4 bis 6 mal größer ist als auf dem ersten Förderorgan (2).

14. Windsichter nach einem der vorhergehenden Ansprüche,
**dadurch gekennzeichnet,**
**dass** die Verteilvorrichtung (3) die von dem ersten Förderorgan (2) auftreffenden Anteile der Abfallmischung auf ein als Breitband (5) bezeichnetes zweites Förderorgan verteilt, von welchem die Abfallmischung auf die Sichttrommel (6) gelangt.

15. Windsichter nach einem der vorhergehenden Ansprüche,
**dadurch gekennzeichnet,**
**dass** die Verteilvorrichtung (3) die von dem ersten Förderorgan (2) auftreffenden Anteile der Abfallmischung auf die Sichttrommel (6) verteilend angeordnet ist.

16. Windsichter nach einem der vorhergehenden Ansprüche,
**dadurch gekennzeichnet,**
**dass** oberhalb der Sichttrommel (6) ein Prallelement (8) angeordnet ist, welches dort auftreffende Anteile der Abfallmischung nach unten gegen die Sichttrommel (6) lenkt.

## Claims

1. Air separator, having a first conveyor member (2) which conveys a refuse mixture to a separator drum (6),
where the refuse mixture can be fed onto the outside of the separator drum (6) and where disposed between the first conveyor member (2) and the separator drum (6) is an air-blowing element (7) the air stream from which is directed from below at the portion of the separator drum (6) on which the refuse falls, and where the direction of rotation of the separator drum (6) coincides with the blowing direction of the air stream at the point where the air stream hits the circumference of the separator drum (6),
**characterised in that** provided between the first conveyor member (2) and the separator drum (6) is a distributor element (3) which incorporates one or more internally disposed, rotationally driven rotary plates (3) where the distributor element (3) is so designed as to distribute the parts of the refuse mixture coming onto it from the first conveyor member (2) over a greater width than the parts of the refuse mixture coming onto the distributor element take up on the first conveyor member (2).

2. Air separator in accordance with claim 1,
**characterised in that** the distributor element (3) incorporates two horizontally disposed, contra-rotating rotary plates (4) which distribute forwards in the direction of conveyance of the first conveyor member (2) and outwards in a lateral direction parts of the refuse mixture coming onto them.

3. Air separator in accordance with claim 1 or 2,
**characterised in that** the refuse mixture distributed over the greater width come onto the upper half and the side of the separator drum (6) directed towards the first conveyor member (2).

4. Air separator in accordance with any one of the foregoing claims,
**characterised in that** a belt lies in contact with the surface of the separator drum (6).

5. Air separator in accordance with claim 4,
**characterised in that** the belt is designed as a conveyor belt, where the separator drum (6) forms a deflector roller of the conveyor belt.

6. Air separator in accordance with any one of the foregoing claims,
**characterised in that** the rotary plates (4) are each shaped concave in the form of troughs.

7. Air separator in accordance with any one of the foregoing claims,
**characterised in that** the rotary plates (4) are disposed at different heights and that a first rotary plate (4) extends partly over a second rotary plate (4).

8. Air separator in accordance with any one of the foregoing claims,
**characterised in that** a chute is provided which connects to the first conveyor belt (2) and is disposed between the first conveyor belt (2) and the rotary plates (4).

9. Air separator in accordance with claim 8,
**characterised in that** the chute gathers the refuse coming from the first conveyor member (2) into a smaller width than the width with which the refuse is distributed on the first conveyor member (2).

10. Air separator in accordance with any one of the foregoing claims,
**characterised in that** the orientation of the rotary plates (4) can be adjusted relative to the vertical.

11. Air separator in accordance with any one of the foregoing claims,
**characterised in that** the rotation axis of the separator drum (6) is oriented at right angles to the direction of conveyance of the first conveyor member (2).

12. Air separator in accordance with any one of claims 1 to 11, **characterised in**
**that** the rotation axis of the separator drum (6) is oriented in the direction of conveyance of the first conveyor member (2).

13. Air separator in accordance with any one of the foregoing claims,
**characterised in that** the refuse mixture is distributed on the separator drum (6) over a width that is between 4 and 6 times greater than on the first conveyor member (2).

14. Air separator in accordance with any one of the foregoing claims,
**characterised in that** the distributor member (3) distributes the parts of the refuse mixture coming onto it from the first conveyor member (2) onto a second conveyor member designated as a broad band (5) from which the refuse mixture is conveyed to the separator drum (6).

15. Air separator in accordance with any one of the foregoing claims,
**characterised in that** the distributor member (3) is disposed so as to distribute the parts of the refuse mixture coming onto it from the first conveyor member (2) onto the separator drum (6).

16. Air separator in accordance with any one of the foregoing claims,
**characterised in that** disposed above the separator drum (6) is a deflector element (8) which deflects downwards towards the separator drum (6) parts of the refuse mixture which hit it.

## Revendications

1. Séparateur pneumatique comprenant un premier organe convoyeur (2) conduisant un mélange de déchets vers un tambour séparateur (6),
et sachant qu'entre le premier organe convoyeur (2) et le tambour séparateur (6) a été agencé un équipement de soufflage (7) dont le flux d'air est braqué par le bas en direction de la zone du tambour séparateur (6) sur laquelle arrive le mélange de déchets, et sachant que le sens de rotation du tambour séparateur (6) coïncide avec le sens de soufflage du flux d'air là où le flux d'air atteint la circonférence du tambour séparateur (6),
**caractérisé en ce qu'**entre le premier organe convoyeur (2) et le tambour séparateur (6) est prévu un dispositif répartiteur (3) présentant au moins un plateau tournant (3) agencé à l'horizontale et entraîné en rotation, sachant que le dispositif répartiteur (3) est configuré de sorte à répartir les parts du mélange de déchets, parts qui arrivent en provenance du premier organe convoyeur (2), sur une largeur supérieure à celle qu'elles occupent sur le premier organe convoyeur (2).

2. Séparateur pneumatique selon la revendication 1,
**caractérisé en ce que** le dispositif répartiteur (3) présente deux plateaux tournants (4) agencés à l'horizontale et contrarotatifs qui distribuent les parts arrivantes du mélange de déchets vers l'avant, dans le sens de convoyage du premier organe convoyeur (2), et dans le sens latéral vers l'extérieur.

3. Séparateur pneumatique selon la revendication 1 ou 2,
**caractérisé en ce que** le mélange de déchets réparti sur la plus grande largeur arrive contre la moitié supérieure du tambour séparateur (6) et sur le côté de ce dernier tourné vers le premier organe convoyeur (2).

4. Séparateur pneumatique selon l'une des revendications précédentes,
**caractérisé en ce qu'**un tapis applique contre la surface du tambour séparateur (6).

5. Séparateur pneumatique selon la revendication 4,
**caractérisé en ce que** le tapis est configuré en tapis convoyeur, sachant que le tambour séparateur (6) forme un rouleau de renvoi du tapis convoyeur,

6. Séparateur pneumatique selon l'une des revendications précédentes,
**caractérisé en ce que** les plateaux tournants (4) ont chacun la forme concave d'une auge.

7. Séparateur pneumatique selon l'une des revendications précédentes,
**caractérisé en ce que** les plateaux tournants (4) sont agencés à différentes hauteurs et **en ce qu'**une zone d'un premier plateau tournant (4) s'étend au dessus d'un deuxième plateau tournant (4).

8. Séparateur pneumatique selon l'une des revendications précédentes,
**caractérisé en ce qu'**est prévue une goulotte venant se raccorder au premier organe convoyeur (2) et agencée entre ce dernier et les plateaux tournants (4).

9. Séparateur pneumatique selon la revendication 8,
**caractérisé en ce qu'**à l'extrémité de la goulotte cette dernière concentre les déchets venant du premier organe convoyeur (2) sur une largeur inférieure à celle sur laquelle sont répartis les déchets sur le premier organe convoyeur (2).

10. Séparateur pneumatique selon l'une des revendications précédentes,
**caractérisé en ce que** l'orientation des plateaux tournants (4) est réglable proportionnellement à la verticale.

11. Séparateur pneumatique selon l'une des revendications précédentes,
**caractérisé en ce que** l'axe de rotation du tambour séparateur (6) est orienté transversalement au sens de convoyage du premier organe convoyeur (2).

12. Séparateur pneumatique selon l'une des revendications 1 à 11,
**caractérisé en ce que** l'axe de rotation du tambour séparateur (6) est orienté longitudinalement par rapport au sens de convoyage du premier organe convoyeur (2).

13. Séparateur pneumatique selon l'une des revendications précédentes,
**caractérisé en ce que** le mélange de déchets sur le tambour séparateur (6) est réparti sur une largeur 4 à 6 fois supérieure à la largeur sur le premier organe convoyeur (2).

14. Séparateur pneumatique selon l'une des revendications précédentes,
**caractérisé en ce que** le dispositif répartiteur (3) répartit les parts du mélange de déchets, qui arrivent en provenance du premier organe convoyeur (2), sur un deuxième organe convoyeur appelé tapis large (5), deuxième organe depuis lequel le mélange de déchets parvient sur le tambour séparateur (6).

15. Séparateur pneumatique selon l'une des revendications précédentes,
**caractérisé en ce que** le dispositif répartiteur (3) est agencé de manière à répartir sur le tambour séparateur (6) les parts du mélange de déchets arrivant du premier organe convoyeur (2).

16. Séparateur pneumatique selon l'une des revendications précédentes,
**caractérisé en ce qu'**un élément chicane (8) est agencé au dessus du tambour séparateur (6), lequel élément guide vers le bas, contre le tambour séparateur (6), les parts du mélange de déchets en train d'arriver.
